# NEUE EUROPÄISCHE PATENTSCHRIFT

(11) **EP 0 615 085 B2**
(45) Veröffentlichungstag und Bekanntmachung des Hinweises auf die Entscheidung über den Einspruch: **26.01.2000**
(45) Hinweis auf die Patenterteilung: 18.10.1995
(21) Anmeldenummer: 93104037.2
(22) Anmeldetag: 12.03.1993
(51) Int. Cl.: F16J 15/32, F02F 11/00

(54) **Verfahren zum Herstellen einer Wellenabdichtung**
Method for making a shaft seal
Méthode de fabrication d'un joint d'étanchéité à lèvres

(43) Veröffentlichungstag der Anmeldung: 14.09.1994
(73) Patentinhaber: Dichtungstechnik G. Bruss GmbH & Co. KG, D-22955 Hoisdorf (DE)
(72) Erfinder: Hering, Jürgen, W-2359 Sievershütten (DE); Johnen, Rolf, W-2071 Hoisdorf (DE); Upper, Gerd, Dr., W-2071 Hoisdorf (DE)
(74) Vertreter: Liesegang, Roland, Dr.-Ing.

(56) Entgegenhaltungen:
- EP-A- 0 139 503
- DE-A- 3 327 229
- DE-A- 3 613 220
- DE-A- 3 634 735

## Beschreibung

Die Erfindung betrifft ein Verfahren zum Herstellen einer Wellenabdichtung sowie eine damit hergestellte Wellenabdichtung gemäß dem Oberbegriff des Anspruchs 1.

Bei einer bekannten Abdichtung dieser Art (EP-A-0 139 503) wird zunächst der Wellendichtring an den radialen Flansch eines im Profil L-förmigen Blechringes angeformt. Zum Verbinden mit einer Dichtungsaufnahme wird der äußere, achsparallel stehende Abschnitt dieses Blechringes in den Formhohlraum einer Spritzform eingesetzt, so daß bei der fertigen Abdichtung der äußere Abschnitt des Blechringes in einer als Innennut ausgebildeten Aussparung der als Kunststoff-Gußteil geformten Dichtungsaufnahme aufgenommen und an diese Dichtungsaufnahme beidseitig durch Elastomermaterial angebunden ist, das auch für die statische Dichtung verwendet ist und mit dieser zusammenhängt. Der so gebildete Dichtungsmodul bestehend aus der Dichtungsaufnahme mit dem Wellendichtring und der statischen Dichtung schafft eine vorgefertigte, austauschbare Einheit. Die beschriebene Anbindung über den achsparallelen Abschnitt des L-förmigen Blechringes erfolgt entweder vor oder nach dem Anformen des Wellendichtringes am inneren Abschnitt des Blechringes, wobei das beidseitig des achsparallelen Abschnittes eingespritzte Elastomermaterial für eine elastische Anbindung sorgt. Aufgrund dieser Art der Gestaltung lassen sich die geforderten geringen radialen Toleranzen zum Erreichen der Koaxialität von Dichtlippe zu Welle nicht ohne weiteres einhalten. Problematisch ist ferner das Setzen oder Kriechen des Kunststoff-Gußteiles unter der Schraubenkraft, was in der Praxis zu Leckagen zwischen Kurbelgehäuse und Abdichtung führen kann.

Für den überwiegenden Einsatzzweck der Erfindung der abtriebsseitigen Kurbelwellenabdichtung bei Kraftfahrzeugen, wobei die Kurbelwelle, die Stirnwand des Kurbelgehäuses und die dazu senkrecht verlaufende Wand des Kurbelgehäuses gegenüber der Ölwanne abzudichten sind, ist eine Abdichtung mit einem Leichtmetall-Druckgußteil als Dichtungsaufnahme millionenfach bewährt. Zur Montage einer solchen Abdichtung werden sämtliche Teile, nämlich der Radial-Wellendichtring, das Druckgußteil, eine Flachdichtung als statische Dichtung über der Stirnwand des Kurbelgehäuses etc. einzeln bereitgestellt, was bei der Montage mehrere Arbeitsschritte erfordert. Diese vielteilige Lösung bringt vielfache Fehlermöglichkeiten, insbesondere die Möglichkeit der Beschädigung der einzelnen Elemente der Wellenabdichtung mit sich. In diesem Zusammenhang haben Untersuchungen der Anmelderin gezeigt, daß Wellenabdichtungen vor allem wegen Beschädigungen im Dichtkantenbereich des Wellendichtringes als Ausschuß aussortiert werden müssen.

Die Erfindung strebt an, ein Verfahren zur Herstellung einer Abdichtung zu schaffen, bei dem der dynamische Wellendichtring als auch die statische Dichtung in eine Dichtungsaufnahme eingebaut als vorgefertigte Einheit bereitgestellt wird, wobei jedoch weitestgehend auf unveränderte bewährte Elemente, insbesondere auch das Leichtmetall-Druckgußteil zur Aufnahme der Dichtungen zurückgegriffen werden soll. Dabei soll erreicht werden, daß die relativ teuren Druckgußteile auch bei Fehlerhaftigkeit insbesondere des Wellendichtringes wiederverwendbar gemacht werden, wobei gleiche Druckgußteile für unterschiedliche Dichtungsmodule zum Ersteinbau und zum Austausch als Ersatzteil im Kundendienst verwendbar gemacht werden sollen. Ferner soll der Wellendichtring so konzipiert werden, daß er nicht nur chemischem Angriff durch das abzudichtende Medium (Schmieröl) standhält sondern auch bei hoher thermischer Belastung Ablagerungen aus dem Medium an der Dichtlippe vermeidet.

Bei einem bekannten Konzept, bei dem ein Wellendichtring und eine statische Dichtung an eine Dichtungsaufnahme zur Bildung einer Wellenabdichtung mit einem einzigen Formwerkzeug angeformt werden (DE-C 36 34 735), wobei allerdings die Dichtungsaufnahme aus einem Blech gezogen ist, stehen einer Vorfertigung folgende Schwierigkeiten entgegen:
Da die Druckgußteile nicht spanend bearbeitet und mit den relativ großen Toleranzen des Druckgußverfahrens hergestellt wurden, muß das Formwerkzeug so ausgelegt werden, daß an den Abdruckkanten eine plastische Verformung des Druckgußträgers erfolgt. Bei einem zweiten Produktionsversuch im gleichen Formwerkzeug drückt das Werkzeug am zurückgewonnenem Druckgußträger nicht mehr einwandfrei ab und wird überspritzt.

Die Forderungen, im gleichen Formwerkzeug die dynamische und die statische Dichtung an dem Druckgußträger anzuformen, macht diese Werkzeuge in Herstellung und Instandhaltung sehr teuer, weil immer die sehr viel höheren Anforderungen an die Güte der dynamischen Dichtung, d.h. des Wellendichtringes, den Aufwand bestimmen.

Das Volumen der in die Werkzeuge einzulegenden Metallteile beeinflußt die Fertigungsbedingungen vor allem auch durch die Zeit bis zur gleichmäßigen Aufheizung auf die Temperaturen des Formwerkzeuges nachteilig.

Bei dem bekannten Konzept bestimmen die höheren technischen Forderungen zur Fertigung der dynamischen Dichtkante die Anforderungen an die Spritzgießmaschine und die Taktzeit; die einfacher zu fertigende statische Dichtung wird somit zwangsläufig mit einem zu hohen Aufwand gefertigt.

Die Fertigung der Dichtung nach dem bekannten Konzept erfordert hohe Investitionen in neue große Spritzgießmaschinen hoher Schließkraft mit höchster Präzision, die für die Fertigung von Radial-Wellendichtringen geeignet sein müssen, während vorhandene kleinere Spritzgießmaschinen für Radial-Wellendichtringe stillgelegt werden müssen, weil diese Produkte durch die neuen Dichtungen substituiert werden.

Die Betriebsbedingungen erfordern in der Regel für die dynamische Dichtung einen wesentlich teureren Werkstoff als für die statische Dichtung. Vor allem bei großen Dichtungsmodulen würde es deutliche Kostenvorteile mit sich bringen, verschiedene Werkstoffe für die statische und dynamische Dichtung vorzusehen. Dies ist mit dem bekannten Konzept nicht zu leisten.

Die Erfindung behebt die genannten Schwierigkeiten mit einem Verfahren gemäß Anspruch 1 und mit einer Abdichtung gemäß Anspruch 2.

Vorteilhafte Ausgestaltungen der Abdichtung nach der Erfindung sind in den Unteransprüchen angegeben.

Wellendichtringe, die aus Polytetrafluorethylen (PTFE) gefertigt sind und eine Dichtlippe und eine Schutzlippe sowie zur Erzielung einer Rückförderwirkung auf das abzudichtende Medium einen gewindeartigen Schlitz in der Dichtlippe aufweisen können, sind an sich bekannt (DE-A-33 27 229).

Ein Wellendichtring mit PTFE-Dichtlippe bedarf im Gegensatz zu einem Wellendichtring mit elastomerer Dichtlippe immer einer zusätzlichen hydrodynamischen Dichthilfe, die in der Regel als eingeschnittenes oder eingeprägtes Gewinde ausgeführt ist. Ein Beispiel hierfür offenbart die DE-OS 24 60 185.
Ausführliche Untersuchungen haben gezeigt, daß der Ausfall von derartigen Wellendichtringen hauptsächlich dadurch bewirkt wird, daß dieses Rückfördergewinde durch Ablagerung von Zersetzungsprodukten aus dem abzudichtenden Öl zugesetzt und somit funktionslos wird. Hierbei handelt es sich um Produkte aus chemischen Reaktionen des im Dichtspalt in kleinster Menge befindlichen Öles bzw. seiner Additve in Abhängigkeit von Druck und Temperatur, die im Dichtspalt herrschen, als auch der Verweilzeit des Öls im Dichtspalt.

Die Erfindung führt zu folgenden Vorteilen:
- das relativ teure Druckgußteil wird nur mit einwandfreien dynamischen Dichtelementen verarbeitet, was die Ausschußrate senkt;
- für das Anspritzen der statischen Dichtung an dem Gußteil können verhältnismäßig einfach gestaltete Formwerkzeuge unter Verwendung vorhandener Spritzgießmaschinen eingesetzt werden;
- es ist ohne weiteres der Einsatz eines hochwertigen, ölverträglichen Kunststoffes, vorzugsweise PTFE, für die Fertigung des Wellendichtringes einerseits und eines billigen Elastomerkunststoffes für die Fertigung der statischen Dichtung andererseits möglich;
- durch den erfindungsgemäßen Einsatz eines mehrgängigen Gewindes als hydrodynamische Dichthilfe ist es möglich, den Ölaustausch unter der Dichtkante entsprechend der Ganganzahl des Gewindes zu vergrößern und damit die Verweilzeit des gleichen Ölvolumens unter den Bedingungen, die ein Zersetzen provozieren, deutlich zu verringern;
- aufgrund eines radialen Versatzes oder einer innen unrunden Ausbildung, z.B. als Ellipse oder mehrfaches Polygon, der PTFE-Dichtlippe einer die axiale Kante der Dichtlippe im eingebauten Zustand wellenförmig zu einer Umfangslinie der Welle verläuft und übt damit eine zusätzliche Rückförderwirkung bei Umlauf der Welle auf das abzudichtende Medium aus, wodurch der Ölaustausch unter der Dichtlippe weiter beschleunigt wird.
   Mit der letztgenannten Maßnahme des radialen Versatzes der Dichtlippe zur Wellenachse wird ferner erreicht, daß die von der Dichtlippe bei Drehung der Welle bestrichene Fläche auf der Welle größer ist als die eigentliche Auftragfläche der Dichtlippe selbst. Die Bedingungen zur Abfuhr der Reibungswärme über die Welle werden damit verbessert und das Niveau der Übertemperatur unter der Dichtlippe abgesenkt.

Die Erfindung ist im folgenden anhand schematischer Zeichnungen an Ausführungsbeispielen mit weiteren Einzelheiten näher erläutert.

Es zeigen:
- Fig. 1: eine auseinandergezogene Darstellung einer Wellenabdichtung für das abtriebsseitige Ende einer Kurbelwelle eines Kraftfahrzeugs sowie der Stirnwand des zugehörigen Kurbelwellengehäuses;
- Fig. 2 bis 5: in größerem Maßstab Teilquerschnitte durch unterschiedliche Ausführungen von Wellenabdichtungen gemäß der Erfindung.

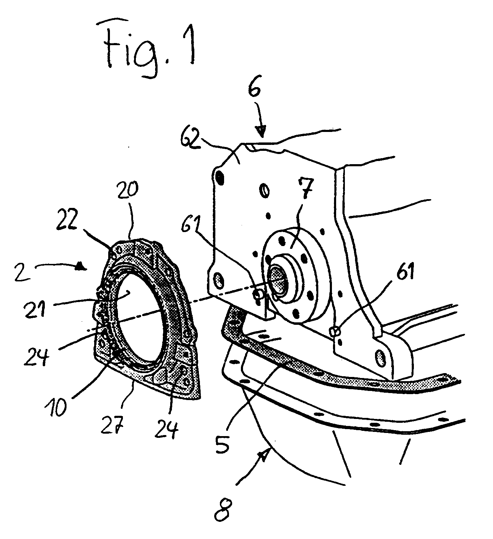

In der auseinandergezogenen Darstellung nach Fig. 1 ist der Aufbau einer Abdichtung für die Abtriebsseite einer Kurbelwelle eines Kraftfahrzeuges dargestellt.

Die insgesamt mit dem Bezugszeichen 2 bezeichnete Abdichtung hat als Dichtungsaufnahme ein Aluminium-Druckgußteil 20 mit darin vormontiertem dynamischen Dichtelement 10, einer Durchlaßöffnung 21 für eine Kurbelwelle 7, Durchstecklöchern 22 für Schrauben zur Befestigung an der Stirnwand 62 eines Kurbelgehäuses 6, Paßlöchern 24 zur Aufnahme von Paßstiften 61, einer in Fig. 1 nicht zu sehenden Gehäuseseite 26 und einer dazu senkrecht stehenden Unterseite 27, mit welcher die Dichtungsaufnahme gegen die Ölwannendichtung 5 einer an der Unterseite des Kurbelgehäuses 6 angebrachten Ölwanne 8 angedrückt ist.

Die in den Figuren 2 bis 5 dargestellten axialen Teilschnitte der fertig montierten Abdichtung 2 zeigen in vergrößertem Maßstab den Aufbau unterschiedlich gemäß der Erfindung gestalteter Abdichtungen in ihren Einzelheiten, wobei gleiche oder gleichwirkende Teile mit gleichen Bezugszahlen bezeichnet sind.

Das dynamische Dichtelement 10 besteht aus Polytetrafluorethylen (PTFE). Zur Herstellung wird eine Scheibe von einem Rohr aus PTFE abgestochen und plan, also ohne zusätzliche Verformung, an das Druckgußteil 20 in folgender Weise anvulkanisiert:

Das Dichtelement 10 wird in eine axiale Aussparung 201 des Druckgußteiles 20 gegen einen Bund 28 eingepreßt. Oberhalb des Bundes 28 ist eine hinterschnittene Nut 29 in dem Druckgußteil beim Druckgießen eingeformt. Ferner ist in dem Druckgußteil 20 auf der Gehäuseseite 26 eine Nut 21 zur Aufnahme der statischen Dichtung 3 sowie ein Verbindungskanal 23 von dieser Nut 21 zur hinterschnittenen Nut 29 auf der Rückseite des Wellendichtringes 10 sowie zu dem Bereich der Ausparung 201 auf der Vorderseite des Wellendichtringes 10 eingeformt. Es können auch mehrere solche Verbindungskanäle 23 von der die Aussparung 201 umgebenden Ringnut 21 ausgehen.

In einem Formschritt werden dann gleichzeitig eine die Ringnut ausfüllende statische Dichtung 3 und Ringe 30, 31 aus Elastomermaterial geformt, welche den äußeren Abschnitt 12 des Wellendichtringes in fertiggestelltem Zustand der Abdichtung 2 einsäumen und an das Gußteil 20 anvulkanisieren.

Um bei dem beschriebenen Formvorgang völlige Dichtheit zu erreichen, ist eine Nase 203 auf der Angußseite mit dem Anguß 204 für das Elastomermaterial vorgesehen. Diese Nase 203 wird beim Schließen des Formwerkzeuges bis in den plastischen Bereich hinein verformt, wobei die Kraft zur Verpressung zunächst proportional mit der Verformung ansteigt, dann aber bei Erreichen der plastischen Verformung nahezu konstant bleibt.

Nach dem Formen der statischen Dichtung 3 und der Ringe 30, 31 steht der innere Abschnitt 11, der nach dem Abstechen von einem PTFE-Rohr noch mit Schlitzen 110 in Form eines mehrgängigen Gewindes versehen worden war, noch radial. In einem nachfolgenden Arbeitsgang wird der Wellendichtring auf eine zylindrische Hülse mit kleinerem oder gleichem Durchmesser wie die Welle 7 aufgezogen und dadurch in axiale Richtung abgebogen. Erst kurz vor der Endmontage der Abdichtung am Motor bzw. auf der Kurbelwelle 7 wird diese Hülse wieder entfernt.

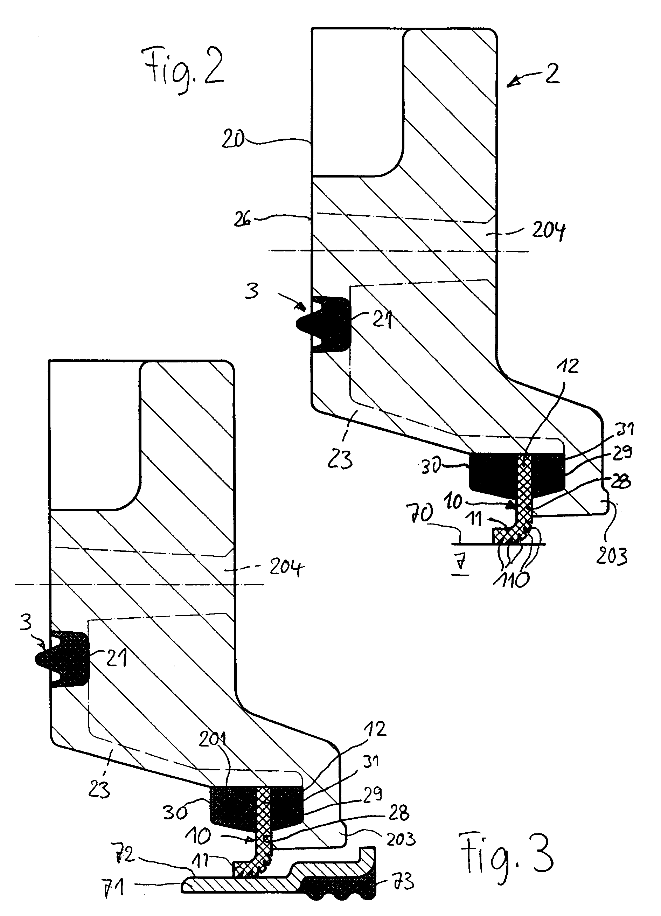

Der einzige Unterschied bei der Abdichtung nach Fig. 3 ist, daß die Abdichtung auf eine Verschleißhülse 71 aufgezogen wird, welche eine Gegenlauffläche 72 trägt und bei der Endmontage auf die hier nicht gezeigte Welle 7 aufgepreßt wird. Durch eine innen an die Verschleißhülse 71 anvulkanisierte Elastomerauflage 73 wird eine dauerhafte und sichere statische Abdichtung gegen Kriechöl erreicht, das sonst zwischen Welle 7 und Verschleißhülse 71 durchtreten könnte. Die Ausführung der Elastomerauflage 73 mit einer Rillung reduziert die Aufpreßkraft ohne Einbuße an Abdichtqualität. Diese Konstruktion hat den Vorteil, daß die Hülse entfällt, die sonst temporär bis zur Endmontage auf der Welle 7 erforderlich wäre. Die Gegenlauffläche 72, welche im Betrieb mit der Welle relativ zur Dichtlippe 11 des Wellendichtringes 10 dreht, bietet außerdem die Möglichkeit, Werkstoff und Oberfläche optimal auf den Wellendichtring 10 aus PTFE abzustimmen. Ferner ergeben sich Vorteile beim Austausch in Reparaturfällen, weil die neue Wellendichtung gleich mit einer neuen Gegenfläche auf der Welle eingebaut wird.

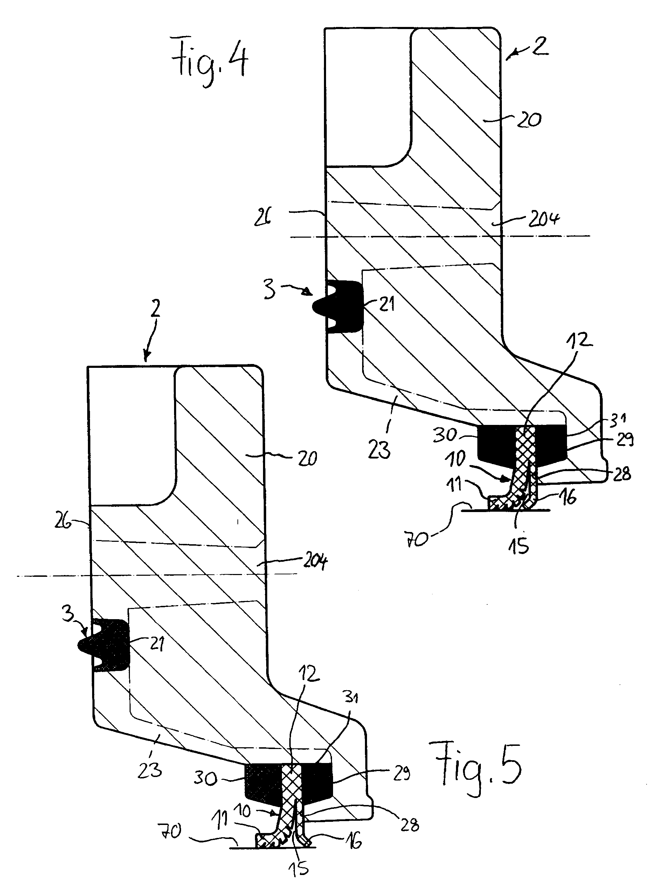

Die Ausführungen nach den Figuren 4 und 5 ähneln denjenigen nach Fig. 2 mit dem Unterschied, daß der Wellendichtring vor dem Aufziehen auf eine temporäre Hülse oder auf die integrierte Hülse 71 mit Gegenlauffläche 72 mit einem radialen Spalt 15 zur Bildung einer Schutzlippe 16 versehen wird. Im übrigen sind Aufbau und Wirkung gleich wie bei den vorbeschriebenen Ausführungen gemäß Figuren 2 und 3 und nicht nochmals beschrieben.

Bei der Ausführung nach Fig. 4 ist die Schutzlippe 16 in gleicher Richtung wie die Dichtlippe 11 abgebogen, während sie bei der Ausführung nach Fig. 5 in Richtung entgegengesetzt zur Dichtlippe abgebogen ist.

Bei allen Ausführungen gemeinsam kann die den Wellendichtring 10 aufnehmende Aussparung als exzentrische Bohrung 201 mit einer Exzentrizität in der Größenordnung zwischen 0,2 und 1,0 mm ausgeführt sein. Hierdurch läßt sich erreichen, daß die Kante der Dichtlippe 11 des Wellendichtringes 10 nicht senkrecht zur Drehachse der Welle verläuft sondern sinusförmig.

## Patentansprüche

1. Verfahren zum Herstellen einer Abdichtung (2) für das aus der Stirnwand (62) eines Gehäuses (6) austretende Ende einer Welle (7) sowie für die Stirnwand (62), mit einer als Gußteil ausgeführten Dichtungsaufnahme (20) mit einer Gehäuseseite (26), einer Durchlaßöffnung (21) für die Welle (7), einem in der Durchlaßöffnung sitzenden Dichtelement (10) und einer auf der Gehäuseseite (26) angeordneten statischen Dichtung (3) aus einem Elastomermaterial zum Abdichten gegenüber der Stirnwand (62) des Gehäuses (6), wobei ein äußerer Abschnitt (12) des Wellendichtringes an einem eine Aussparung (201) begrenzenden Bund (28) der Dichtungsaufnahme (20) anliegt und beidseitig an der Dichtungsaufnahme durch Elastomermaterial angebunden wird, welches mit der statischen Dichtung (3) zusammenhängt, dadurch **gekennzeichnet,** daß die Dichtungsaufnahme (20) als Leichtmetall-Druckgußteil hergestellt wird, daß das dynamische Dichtelement (10) aus einem mit dem abzudichtenden Medium, z.B. Öl, gut verträglichen Kunststoff hergestellt wird und von der Gehäuseseite (26) der Dichtungsaufnahme (20), zu der hin die Aussparung (201) offen ist, in die Aussparung (201) der Dichtungsaufnahme unter radialer und axialer Pressung eingedrückt wird, daß der radial verlaufende äußere Abschnitt (12) des Wellendichtringes (10) beidseitig mit dem Elastomermaterial über einen Verbindungskanal (23) in der Dichtungsaufnahme (20) zu einer stirnwandseitigen Aufnahmenut (21) für die statische Dichtung (3) bei deren Anspritzen an die Dichtungsaufnahme umspritzt wird.

2. Abdichtung für das aus der Stirnwand (62) eines Gehäuses austretende Ende einer Welle (7) sowie für die Stirnwand (62), mit einer als Gußteil ausgeführten Dichtungsaufnahme (20) mit einer Gehäuseseite (26), einer Durchlaßöffnung (21) für die Welle (7), einem in der Durchlaßöffnung sitzenden Dichtelement (10) und einer auf der Gehäuseseite (26) angeordneten statischen Dichtung (3) aus einem Elastomermaterial zum Abdichten gegenüber der Stirnwand (62) des Gehäuses (6), wobei ein äußerer Abschnitt (12) des Dichtelementes an einem eine Aussparung (201) begrenzenden Bund (28) der Dichtungsaufnahme anliegt und beidseitig an der Dichtungsaufnahme durch Elastomermaterial angebunden ist, welches mit der statischen Dichtung (3) zusammenhängt, dadurch **gekennzeichnet,** daß die Dichtungsaufnahme als Leichtmetall-Druckgußteil (20) ausgeführt ist, daß die Aussparung (201) zur Gehäuseseite (26) der Dichtungsaufnahme hin offen ist und das aus einem mit dem abzudichtenden Medium, z.B. Öl, gut verträglichen Kunststoff bestehende Dichtelement (10) von der Gehäuseseite (26) her gegen den Bund (28) unter radialer und axialer Pressung in die Aussparung (201) eingedrückt ist, und daß der radial verlaufende äußere Abschnitt (12) des Dichtelementes (10) beidseitig von Ringen (30, 31, 32) gleichen Außendurchmessers aus Elastomermaterial eingesäumt ist, die über mindestens einen gemeinsamen Verbindungskanal (23) mit einer Nut (21) auf der Gehäuseseite (26) zur Aufnahme der statischen Dichtung (3) in Verbindung stehen.

3. Abdichtung nach Anspruch 2,
dadurch **gekennzeichnet,** daß der Ring (31) aus Elastomermaterial auf der dem Gehäuse (6) abgewandten Seite des Dichtelementes (10) in einer den Bund (28) hinterschneidenden Ringnut (29) aufgenommen ist.

4. Abdichtung nach Anspruch 2 oder 3,
dadurch **gekennzeichnet,** daß das Dichtelement (10) aus Polytetrafluorethylen besteht und mittels einer in axialer Richtung abgebogenen Dichtlippe (11) an der Welle (7) anliegt.

5. Abdichtung nach Anspruch 4,
dadurch **gekennzeichnet,** daß die Dichtlippe (11) zur Bildung einer Rückförderwirkung für das abzudichtende Medium mit Schlitzen (110) in Gestalt eines mehrgängigen Gewindes versehen ist.

6. Abdichtung flach Anspruch 4 oder 5,
dadurch **gekennzeichnet,** daß der Wellendichtring zur Bildung einer Schutzlippe (16) radial gespalten ist.

7. Abdichtung nach Anspruch 6,
dadurch **gekennzeichnet,** daß die Schutzlippe (16) von der Dichtlippe (11) weggebogen ist.

8. Abdichtung nach Anspruch 6,
dadurch **gekennzeichnet,** daß die Schutzlippe (16) zur Dichtlippe (11) hingebogen ist.

9. Abdichtung nach einem der Ansprüche 2 bis 8,
dadurch **gekennzeichnet,** daß die Aussparung (201) als exzentrische Bohrung ausgebildet ist.

10. Abdichtung nach einem der Ansprüche 2 bis 9,
dadurch **gekennzeichnet,** daß die Abdichtung eine integrierte, zum Mitlaufen mit der Welle (7) konzipierte Gegenlauffläche (72) aufweist.

## Claims

1. Method for the manufacture of a seal (2) for the end of a shaft (7) passing out of the end wall (62) of a casing (6), as well as for the end wall (62), with a gasket receptacle (20) in the form of a casting and having a casing side (26), a passage opening (21) for the shaft (7), a sealing element (10) located in the passage opening and a static gasket (3) made from an elastomer material located on the casing side (26) for providing a sealing action with respect to the end wall (62) of the casing (6), an outer portion (12) of the shaft seal ring engaging on a collar (28) delimiting a recess (201) of the gasket receptacle (20) and being fastened on both sides to the gasket receptacle by elastomer material, which is linked with the static gasket (3), characterized in that the gasket receptacle (20) is manufactured as a light metal pressure die casting, that the dynamic sealing element (10) is made from a plastic having good compatibility with the medium to be sealed, e.g. oil,and is pressed under radial and axial pressing into the recess (201) of the gasket receptacle (20) from the casing side (26) towards which the recess (201) is open, that the radially directed, outer portion (12) of the shaft seal ring (10) is injected round on both sides with the elastomer material via a connecting channel (23) in the gasket receptacle (20) to an end wall-side reception groove (21) for the static gasket (3) during the moulding thereof to the gasket receptacle.

2. Seal for the end of a shaft (7) passing out of the end wall (62) of a casing (6), as well as for the end wall (62), with a gasket receptacle (20) in the form of a casting and having a casing side (26), a passage opening (21) for the shaft (7), a sealing element (10) located in the passage opening and a static gasket (3) made from an elastomer material located on the casing side (26) for providing a sealing action with respect to the end wall (62) of the casing (6), an outer portion (12) of the shaft seal ring engaging on a collar (28) which delimits a recess (201) of the gasket receptacle (20) and being fastened on both sides to the gasket receptacle by elastomer material, which is linked with the static gasket (3), characterized in that the gasket receptacle is constructed as a light metal pressure die casting (20), that the recess (201) is open to the casing side (26) of the gasket receptacle and the sealing member (10) made from a plastic with a good compatibility with respect to the medium to be sealed, e.g. oil is pressed from the casing side (26) against the collar (28) under radial and axial pressure in the recess (201) and that the radially directed outer portion (12) of the sealing member (10) is bordered on both sides by rings (30,31,32) having the same external diameter and made from elastomer material, which are connected by means of at least one common connecting channel (23) to a groove (21) on the casing side (26) for receiving the static gasket (3).

3. Seal according to claim 2, characterized in that the elastomer material ring (31) is received on the side of the sealing member (10) remote from the casing (6) in a circular groove (29) undercutting the collar (28).

4. Seal according to claim 2 or 3, characterized in that the sealing member (10) is made from polytetrafluoroethylene and engages on the shaft (7) by means of a sealing lip (11) bent in the axial direction.

5. Seal according to claim 4, characterized in that the sealing lip (11) is provided with slots (110) in the form of a multi-start thread for forming a return feed action for the medium to be sealed.

6. Seal according to claim 4 or 5, characterized in that the shaft seal ring is radially split for forming a protective lip (16).

7. Seal according to claim 6, characterized in that the protective lip (16) is bent away from the sealing lip (11).

8. Seal according to claim 6, characterized in that the protective lip (16) is bent towards the sealing lip (11).

9. Seal according to one of the claims 2 to 8, characterized in that the recess (201) is constructed as an eccentric bore.

10. Seal according to one of the claims 2 to 9, characterized in that the seal has an integrated antirotation face (72) for rotating with the shaft (7).

## Revendications

1. Procédé de fabrication d'un joint d'étanchéité (2), pour l'extrémité d'un arbre (7), sortant de la paroi frontale (62) d'un carter (6), ainsi que pour la paroi frontale (62), avec un logement de joint d'étanchéité (20) réalisé sous forme de pièce moulée avec une partie carter (26), une ouverture de passage (21) pour l'arbre (7), un élément d'étanchéité (10) placé dans l'ouverture de passage et un joint d'étanchéité statique (3) disposé du côté carter (26), réalisé en un matériau élastomère, pour donner une isolation étanche vis-à-vis da la paroi frontale (62) du carter (6), une section extérieure (12) de la bague d'étanchéité d'arbre appuyant sur une collerette (28) qui delimite un évidement (201) du logement de joint d'étanchéité (20) et étant relié au moyen d'un matériau élastomère des deux côtés sur le logement de joint d'étanchéité, qui est placé ci, cohésion avec le joint d'étanchéité statique (3), caractérisé en ce que le logement de joint d'étanchéité (20) est fabriqué sous forme de pièce moulée sous pression en alliage léger, en ce que l'élément d'étanchéité dynamique (10) est fabriqué à partir d'un matériau synthétique bien compatible avec le fluide pour lequel on doit assurer l'étanchéité, par exemple de l'huile, et est ouvert du cote' carter (26) du logement de joint d'étanchéité (20) vers l'évidement (201), en étant pressé sous pression radiale et axiale dans l'évidement (201) du logement de joint d'étanchéite, en ce que la section extérieure (12), s'étendant radialement, de la bague d'étanchéité d'arbre (10) est enrobée par injection des deux côtés avec le matériau élastomére par un canal de liaison (23) ménagé dans le logement de joint d'étanchéité (20) vers une gorge de réception (21), du coté de la paroi frontale, destinée au joint d'étanchéité statique (3), lors de son surmoulage par injection sur le logement d'étanchéité.

2. Joint d'étanchéité pour l'extrémité d'un arbre (7), sortant de la paroi frontale (62) d'un carter, ainsi que pour la paroi frontale (62), avec un logement de joint d'étanchéité (20) réalisé sous forme de pièce moulée dotée d'un coté carter (26), d'une ouverture de passage (21) pour l'arbre (7), d'un élément d'étanchéité (7) siégeant dans l'ouverture de passage et d'un joint d'étanchéité statique (3) disposé du côté carter (26), réalisé en un matériau élastomère destiné à isoler de façon étanche vis-à-vis de la paroi frontale (62) du carter (6), une section extérieure (12) de l'élément d'étanchéité appuyant sur une collerette (28), qui delimite un évidement (201) du logement de joint d'étanchéité et étant relié des deux côtés, sur le logement de joint d'étanchéité au moyen d'un matériau élastomère qui est en cohésion avec le joint d'étanchéité statique (3) caractérisé en ce que le logement de joint d'étanchéité est réalisé sous forme de pièce moulée sous pression (20) en métal léger, en ce que l'évidement (201) est ouvert vers le coté carter (26) du logement de joint d'étanchéité et en ce que l'élément d'étanchéité (10), qui est constitué d'une matière synthétique bien compatible avec le milieu à isoler de façon étanche, par exemple de l'huile, est enfoncé depuis le côté carter (26) contre la collerette (28) avec pressage radial et axial, dans l'évidement (201), et en ce que la section extérieure (12), s'étendant radialement, de l'élément d'étanchéité (10) est ourlée des côtés des anneaux ou des bagues (30, 31, 32) présentant le même diamètre extérieur et réalisée en matérieau élastomère, relié, par au moins un canal de liaison (23) commun à une gorge (21) ménagée sur le coté carter (26), en vue de recevoir le joint d'étanchéité statique (3).

3. Joint d'étanchéité selon la revendication 2, caractérisé en ce que la bague (31) en matériau élastomère est logée, du côté opposé au carter (6) de l'élément d'étanchéité (10), dans une gorge annulaire (29) créant une contre-dépouille pour la collerette (28).

4. Joint d'étanchéité selon la revendication 2 ou 3, caractérisé en ce que l'élément d'étanchéité (10) étant polytetrafluorethylène et appui sur l'arbre (7), au moyen d'une lèvre d'étanchéité (11) repliée en direction axiale.

5. Joint d'étanchéité sur la revendication 4, caractérisé en ce que la lèvre d'étanchéité (11) est pourvue de fentes (110) se présentant sous la forme d'un filetage à plusieurs filets, pour produire un effet de reflux pour le milieu pour lequel on peut constituer une isolation étanche.

6. Joint d'étanchéité selon la revendication 4 ou 5, caractérisé en ce que la bague d'étanchéité d'arbre est fendue radialement pour constituer une lèvre de protection (16).

7. Joint d'étanchéité selon la revendication 6, caractérisé en ce que la lèvre de protection (16) est écartée de la lèvre d'étanchéité (11).

8. Joint d'étanchéité selon la revendication 6, caractérisé en ce que la lèvre de protection (16) est écartée de la lèvre de protection (16) est repliée vers la lèvre d'étanchéité (11).

9. Joint d'étanchéité selon l'une des revendications 2 à 8, caractérisé en ce que l'évidement (201) est réalisé sous forme de perçage excentrique.

10. Joint d'étanchéité selon l'une des revendications 2 à 9, caractérisé en ce que le joint d'étanchéité présente une contre surface de défilement (72), conçue pour se mouvoir conjointement avec l'arbre (7).
